# EUROPÄISCHE PATENTANMELDUNG

(11) **EP 2 942 786 A1**
(43) Veröffentlichungstag der Anmeldung: **11.11.2015**
(21) Anmeldenummer: 15165583.4
(22) Anmeldetag: 29.04.2015
(51) Int. Cl.: H01B 9/00, B60M 5/02, H01B 7/22

(54) **KABEL, INSBESONDERE ERDUNGSKABEL ZUR ERDUNG VON EINRICHTUNGEN IM FREILAND**

(30) Priorität: 09.05.2014 DE 102014208821
(71) Anmelder: Bayerische Kabelwerke AG, 91154 Roth (DE)
(72) Erfinder: Wolfsberger, Friedrich, 91177 Thalmässing (DE)
(74) Vertreter: FDST Patentanwälte

(57) **Zusammenfassung**

Das Kabel (2) ist insbesondere als Erdungskabel zur Erdung von Einrichtungen im Freiland, insbesondere Eisenbahneinrichtung eingesetzt. Es weist eine Mehrzahl von Einzeldrähten (4) auf, die von einem Kabelmantel (6) umgeben sind. Die Einzeldrähte (4) sind einem Kern (10) und in zumindest einer den Kern (10) umgebenden Lage (12, 14) angeordnet. Ein Teil der Einzeldrähte ist als Kupferdrähte (4C) ausgebildet. Um einen Diebstahlschutz zu erreichen ist weiterhin eine Kombination aus magnetischen Einzeldrähten, insbesondere Stahldrähten (4A) sowie nicht magnetischen Einzeldrähten, insbesondere Edelstahldrähte (4B) vorgesehen. Ergänzend sind die Einzeldrähte (4) vorzugsweise in einer Dichtmasse (20) eingebettet und weiter besteht vorzugsweise die äußere Lage (12) des Verbunds aus den Einzeldrähten (4) ausschließlich aus verzinnten Kupferdrähten (4C). Durch diese Maßnahmen wird das Recyceln und damit der Wert derartiger Kabel (2) deutlich gemindert.

## Beschreibung

Die Erfindung betrifft ein Kabel, insbesondere ein Erdungskabel zur Erdung von Einrichtungen im Freiland, speziell von Eisenbahneinrichtungen mit den Merkmalen des Oberbegriffs des Anspruchs 1.

Ein derartiges Erdungskabel ist aus der EP 2 202 758 A2 zu entnehmen.

Bei Installationen im Freiland, wie beispielsweise bei Eisenbahneinrichtungen, ist oftmals eine elektrische Erdung der Einrichtungen vorgeschrieben oder erforderlich. Hierzu werden so genannte Erdungskabel eingesetzt, die an den zu erdenden Gegenstand angeschlossen sind. Unter Eisenbahneinrichtungen werden allgemein alle zu erdenden Einrichtungen im Bahnhofsbereich oder im Bereich einer Bahntrasse verstanden, wie beispielsweise Handläufe oder auch Schallschutzwände oder prinzipiell auch die Eisenbahnschienen selbst. Bei Eisenbahnschienen wird an deren Grundkörper in regelmäßigen Abständen das Erdungskabel üblicherweise mit Hilfe eines Kabelschuhs unmittelbar angeschraubt.

Aufgrund der Anordnung im Freien sind die Erdungskabel den Witterungseinflüssen ausgesetzt und müssen daher eine hohe Beständigkeit gegenüber den Umwelteinflüssen aufweisen. Heutzutage werden daher als Erdungskabel üblicherweise Kupferkabel eingesetzt. Die Erdungskabel bestehen aus miteinander verseilten Einzeldrähten. Diese können als Massivdrähte oder Litzendrähte ausgebildet sein.

Aufgrund des in den letzten Jahren erheblich gestiegenen Materialpreises für reines Kupfer sehen sich die Betreiber derartiger Anlagen, insbesondere Bahnanlagen, zunehmend mit dem Problem der Entwendung der Kabel konfrontiert. Die entwendeten Erdungskabel werden üblicherweise über Recyclingeinrichtungen wieder dem Wertstoffkreis zugeführt. Durch die Entwendung der Erdungskabel entstehen bei den Betreibern hohe Schäden.

Zur Vermeidung des Diebstahls der Erdungskabel ist prinzipiell der Einsatz von anderen Materialien für die Einzeldrähte möglich. Aufgrund der hohen Anforderungen im Freilandeinsatz sind Erdungskabel aus Nicht-Kupferdrähten jedoch nur bedingt geeignet. So besteht beispielsweise bei der Verwendung von Einzeldrähten aus Aluminium oder einer Aluminiumlegierung unter anderem oftmals das Problem der Korrosion. Zudem sind derartige Erdungskabel sehr steif. Bei der Verwendung von Stahl als Leitermaterial besteht das Problem der gegenüber Kupfer geringen Leitfähigkeit und zudem das Problem, dass eine vergleichsweise hohe Steifigkeit gegeben ist, die bei der Montage der Erdungskabel hinderlich ist.

Zur Vermeidung dieser Probleme und zugleich zur Verbesserung eines Diebstahlschutzes ist gemäß der EP 2 202 758 A2 ein Erdungskabel vorgesehen, bei dem die Einzeldrähte als Litzen ausgebildet sind, welche aus einzelnen Litzendrähten bestehen, die zumindest teilweise als so genannte Kombinationsdrähte ausgebildet sind. Die Kombinationsdrähte weisen dabei einen Drahtkern und einen diesen umgebenden Mantel aus unterschiedlichen Materialien auf. Insbesondere besteht der Drahtkern aus Aluminium oder Stahl und der Mantel aus Kupfer. Durch diese Maßnahme werden - ohne dass dies von außen ersichtlich ist - dem Erdungskabel "Verunreinigungen" beigemengt, nämlich in Form der Stahl- oder Aluminiumkerne, welche von dem Kupfer im Rahmen eines Recyclingprozesses nicht oder nur mit sehr großem Aufwand trennbar sind. Insgesamt wird dadurch der Recyclingwert erheblich gemindert.

Ausgehend hiervon liegt der Erfindung die Aufgabe zugrunde, ein Kabel, insbesondere Erdungskabel, mit gutem Diebstahlschutz bei gleichzeitig einfachem Aufbau anzugeben.

Die Aufgabe wird erfindungsgemäß gelöst durch ein Kabel mit den Merkmalen des Anspruches 1. Das Kabel ist insbesondere als Erdungskabel zur Erdung von Einrichtungen im Freiland, insbesondere von Eisenbahneinrichtungen, vorgesehen und entsprechend ausgebildet. Bevorzugt wird es daher als ein solches Erdungskabel eingesetzt und ist an zu erdende Komponenten insbesondere bei Eisenbahneinrichtungen im Freiland angeschlossen. Das Kabel umfasst eine Mehrzahl von unisolierten Einzeldrähten, die einen Verseilverbund bilden und von einem Kabelmantel aus einem Isolationswerkstoff, typischerweise einem extrudierten Mantel, umgeben sind. Die Einzeldrähte sind dabei in einem Kern sowie in zumindest einer diesen umgebenden Lage angeordnet. Zumindest ein Teil der Einzeldrähte besteht aus Kupfer. Daneben ist weiterhin eine Kombination aus magnetischen Einzeldrähten sowie zumindest einem nicht-magnetischen Einzeldraht, jeweils aus einem von Kupfer verschiedenen Material angeordnet. Bei den magnetischen Einzeldrähten handelt es sich dabei insbesondere um Stahldrähte und bei dem zumindest einen unmagnetischen Einzeldraht handelt es sich bevorzugt um einen Edelstahldraht.

Die Drähte liegen dabei bevorzugt als Massivdrähte vor. Alternativ besteht auch die Möglichkeit, dass sie als Litzen ausgebildet sind, wobei jede Litze (also jeder Einzeldraht) aus einer Vielzahl von einzelnen Litzendrähten besteht.

Die kombinierte Einbringung sowohl von magnetischen Stahldrähten als auch von nicht-magnetischen Edelstahldrähten beruht auf der grundsätzlichen Überlegung, den Recyclingwert und das Recyceln eines derartigen Kabels zu erschweren bzw. den damit erzielbaren Recyclingwert zu mindern, um den Anreiz für eine Entwendung zu minimieren. Durch das Einbringen von Stahldrähten sowie Edelstahldrähten wird zunächst eine Verunreinigung des ansonsten reinen Kupfers erzielt.

Durch die Integration der magnetischen Einzeldrähte weist das Gesamtkabel eine gewisse magnetische Eigenschaft auf. Diese wird üblicherweise bereits bei einem Schrotthändler in einfacher Weise überprüft. Sobald ein Kabel einen Magnetismus zeigt, ist bereits klar, dass es sich nicht um reines Kupfer handeln kann, sondern dass zumindest ein Mischmetall-Verbund vorliegt. Für solche Mischmetall-Verbunde werden aufgrund des erhöhten Trennaufwands regelmäßig deutlich geringere Recyclingpreise erzielt.

Gleichzeitig wird durch Verwendung eines magnetischen sowie eines unmagnetischen Leitermaterials ergänzend ein Trennen der Stahlanteile von den Kupferanteilen bei einem Recyclingprozess zumindest erschwert.

Beim Recyceln werden typischerweise die entwendeten Kabel mit den üblicherweise zu einem Verseilverbund miteinander verseilten Einzeldrähten zerschreddert. Nachfolgend wäre eine magnetische Aussortierung und Trennung der Stahlanteile von den Kupferanteilen grundsätzlich möglich. Durch die zusätzliche Einbringung von nicht-magnetischen Edelstahldrähten verbleibt jedoch ein Rest-Verunreinigungswert, so dass ohne erhöhten Aufwand kein 100% reines Kupfer wiedergewonnen werden kann.

Die Integration von Stahldrähten bietet bereits einen Erst-Diebstahlschutz, da häufig Entwender prüfen, ob es sich um reines Kupfer handelt, welches nicht magnetisch ist. Erkennen sie, dass es sich um magnetisches Material handelt oder dass magnetische Bestandteile enthalten sein müssen, so ist von Anfang an der erzielbare Gewinn erkennbar geringer, so dass bereits dies einen gewissen Diebstahlschutz bietet.

Der Einsatz von Stahldrähten sowie Edelstahldrähten hat weiterhin den besonderen Vorteil, dass diese im Vergleich zu Kupfer deutlich härter sind. Bereits hierdurch wird eine Entwendung insofern erschwert, als dass das gesamte Kabel deutlich schwerer zu durchtrennen ist. Die verwendeten Stahldrähte wirken daher insoweit nach Art einer Armierung.

Schließlich wird durch die härteren Stahlanteile beim Recyclingprozess auch ein Schredderwerkzeug deutlich mehr beansprucht, welches sich ebenfalls nachteilig für die Kostenbilanz eines möglichen Entwenders auswirkt.

Gemäß einer bevorzugten Weiterbildung sind die magnetischen Einzeldrähte, also die Stahldrähte, und weitere der Einzeldrähte gemeinsam mit einer klebrigen Dichtmasse verfüllt. Die magnetischen Einzeldrähte sind daher in einer solchen klebrigen Dichtmasse eingebettet. Bei dieser handelt es sich beispielsweise um ein Fett oder auch ein so genanntes Petrolat oder Paraffin oder auch eine bituminöse Masse. Diese Dichtmasse bildet zum Einen eine weitere Verunreinigung. Weiterhin verhindert sie aufgrund ihrer hohen Haftfähigkeit, dass nach dem Schredderprozess die magnetischen Stahlanteile durch eine magnetische Trennung aussortiert werden können. Durch die klebrige Dichtmasse haften diese vielmehr an den weiteren Bestandteilen und können somit nicht sortenrein aussortiert werden.

Ein weiterer Vorteil der Verwendung der klebrigen Dichtmasse besteht zudem darin, dass auch die Kunststoffanteile der Kabelummantelung an den weiteren Bestandteilen des Kabels nach dem Schreddern haften bleiben und beispielsweise nicht mittels Pressluft von den Metallteilen trennbar ist.

Zweckdienlicherweise ist dabei die klebrige Dichtmasse lediglich im Bereich des Kerns angeordnet und nicht mehr in der äußeren, den Kern umgebenden Lage. Von außen ist - bei einer probenartigen Sichtprüfung nach teilweiser Entfernung des Kabelmantels - zunächst nicht zu erkennen, dass sich im Inneren eine solche Dichtmasse und/ oder weiterhin auch unmagnetische, Nicht-Kupfer-Einzeldrähte befinden. Der Aufbau des Kabels wird daher bei einer Annahme durch einen Schrotthändler, der lediglich den Magnetismus prüft, nicht erkannt. Erst beim nachfolgenden tatsächlichen Recycling durch einen spezialisierten Recycler tritt dieses Problem auf. Ein eventuell zuvor gezahlter Preis für Mischmetalle ist für das nachgelagerte Recycling-Unternehmen wegen der schwierigeren Recycelbarkeit nicht wirtschaftlich, so dass das nachgelagerte Reycling-Unternehmen Gegenmaßnahmen einleiten wird.

Zweckdienlicherweise sind entsprechend auch die nicht-magnetischen Einzeldrähte (Edelstahldrähte) sowie die magnetischen Einzeldrähte (Stahldrähte) ausschließlich in dem Kern angeordnet. Von außen sind daher diese Verunreinigungen optisch nicht erkennbar. Zweckdienlicherweise ist der Kern dabei insgesamt gebildet durch die Kombination aus dem zumindest einen unmagnetischen Einzeldraht und den magnetischen Einzeldrähten.

Der Kern ist üblicherweise - sowie das gesamte Kabel - als Verseilverbund der Einzeldrähte miteinander gebildet. Dabei liegen in einer Lage dieses Verseilverbunds in einer ersten Variante die unmagnetischen und magnetischen Einzeldrähte nebeneinander. Alternativ liegen diese in verschiedenen Lagen vor.

Ein Zentraldraht des Kerns wird allgemein vorzugsweise durch den nicht magnetischen Einzeldraht, insbesondere Edelstahldraht gebildet.

Gemäß einer bevorzugten Ausgestaltung weist der Kern ergänzend auch Kupfer-Einzeldrähte auf. Der Kern besteht in diesem Fall dann aus einer Kombination des zumindest einen Edelstahldrahts mit mehreren Stahldrähten und mit mehreren Kupferdrähten.

In bevorzugter Ausgestaltung ist eine Lage des Kerns, insbesondere dessen äußerste Lage ausschließlich durch Stahldrähte gebildet, die dadurch eine Armierungslage ausbilden, so dass das Kabel insgesamt nur schwer durchtrennbar ist.

Gemäß einer zweckdienlichen Ausgestaltung ist weiterhin vorgesehen, dass die äußerste Lage des Verseilverbunds ausschließlich aus Kupferdrähten besteht. Wie bereits zuvor ausgeführt, ist dadurch der verunreinigte innere Aufbau des Kerns nicht erkennbar.

In bevorzugter Ausgestaltung sind dabei maximal zwei äußere Lagen vorgesehen, welche ausschließlich aus Kupferdrähten bestehen. Dadurch wird gewährleistet, dass die in dem Kern enthaltenen magnetischen Einzeldrähte noch durch eine magnetische Prüfung erkennbar sind.

Vorzugsweise sind in der äußersten Lage Kupferdrähte angeordnet, welche verzinnt sind. Da verzinnte Kupferdrähte grundsätzlich optisch kaum von Stahldrähten zu unterscheiden sind, wird bei einer Sichtprüfung suggeriert, dass es sich um ein Stahlseil handelt. Dies wird zudem auch unterstützt durch den Magneteffekt, welcher nachweisbar ist. Zweckdienlicherweise ist dabei vorgesehen, dass die äußerste Lage ausschließlich aus verzinnten Kupferdrähten besteht. Grundsätzlich können neben den verzinnten Kupferdrähten in der äußersten Lage auch vereinzelte Stahldrähte angeordnet sein. Die Mehrzahl der Einzeldrähte zumindest in der äußersten Lage sind jedoch Kupferdrähte. Der Anteil der Kupferdrähte in der äußersten Lage liegt dabei vorzugsweise bei über 75%.

Insgesamt liegt der Gesamtanteil der durch die Kupferdrähte gebildeten Querschnittsfläche bevorzugt bei größer 75% der Gesamtleiter-Querschnittsfläche des Verbunds der Einzeldrähte, welche ja für die Stromtragfähigkeit entscheidend ist. Die gute Leitfähigkeit von Kupfer bestimmt daher maßgebend die Leitfähigkeit des Kabels.

Insgesamt handelt es sich bei dem Kabel vorzugsweise um einen Verseilverbund von einer Vielzahl von miteinander verseilten Einzeldrähten, wobei der Kern eine Kombination von zumindest einem Edelstahldraht und Stahldrähten aufweist und vorzugsweise den Kern mit der klebrigen Dichtmasse verfüllt ist. Um diesen Kern herum ist schließlich zumindest eine äußerste Lage bestehend aus insbesondere verzinnten Kupferdrähten angebracht.

Weiterhin ist in bevorzugter Ausgestaltung ergänzend vorgesehen, dass in den Außenmantel eine Kennzeichnung, beispielsweise nach Art einer Kennfadenmarke eingebracht ist, um das spezielle Kabel auch als solches zu kennzeichnen. Damit wird erreicht, dass Entwender - nachdem sie von der mangelhaften Recyclingqualität des Kabels Kenntnis erlangt haben - ein derartiges Kabel nicht erneut entwenden.

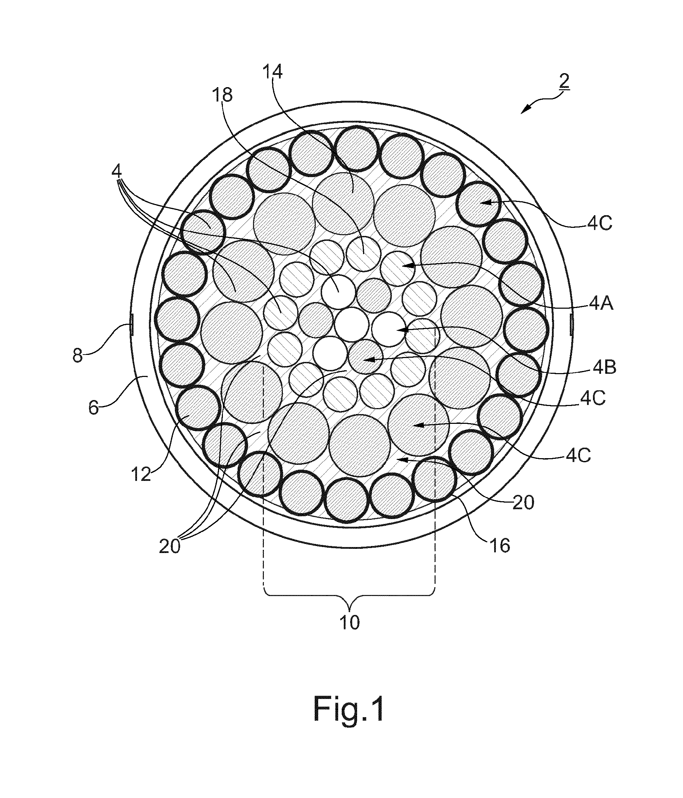

Ein Ausführungsbeispiel der Erfindung wird nachfolgend anhand der Figur näher erläutert. Diese zeigt in einer vereinfachten Querschnittsdarstellung den Aufbau eines Kabels.

Das Kabel 2 ist als Erdungskabel ausgebildet. Es dient insbesondere zur Erdung von Einrichtungen im Freiland, insbesondere von Eisenbahnanlagen. Hierzu ist es in geeigneterweise an derartige Komponenten, wie beispielsweise Eisenbahnschienen oder auch sonstige weitere Einrichtungen wie beispielsweise Geländer, Handläufe etc. angeschlossen. Hierzu wird das Kabel 2 über ein Kontaktelement, insbesondere ein Kabelschuh mit der jeweils zu erdenden Einrichtung elektrisch leitend verbunden.

Das Kabel 2 weist einen Verseilverbund aus einer Vielzahl von Einzeldrähten auf, welche im Ausführungsbeispiel sämtliche als Massivdrähte ausgebildet sind. Die Einzeldrähte 4 bilden einen Verseilverbund. Dieser ist von einem Kabelmantel 6 aus einem Isoliermaterial umgeben. Der Kabelmantel 6 ist dabei beispielsweise auf den Verseilverbund aufextrudiert. Im Ausführungsbeispiel weist der Kabelmantel 6 weiterhin eine nach Art einer Kennfadenmarke aufgebrachte Markierung 8 auf, die in Längsrichtung entlang des Kabelmantels 6 beispielsweise durch eine gesonderte Einfärbung ausgebildet ist.

Der Verseilverbund umfasste einen Kern 10, welcher von zumindest einer Lage und im Ausführungsbeispiel von zwei Lagen des Verseilverbundes umgeben ist.

Der Kern 10 enthält dabei als Einzeldrähte 4 magnetische Einzeldrähte, insbesondere Stahldrähte 4A sowie unmagnetische Einzeldrähte, die nicht aus Kupfer bestehen, insbesondere Edelstahldrähte 4B. Unter magnetische Einzeldrähte werden insbesondere derartige Materialien verstanden, welche zumindest paramagnetisch sind.

Im Ausführungsbeispiel sind innerhalb des Kerns 10 auch noch einzelne Kupferdrähte 4C als Einzeldrähte angeordnet. Um den Kern 10 sind weiterhin ausschließlich Kupferdrähte 4C herumverseilt. Außerhalb des Kerns 10 sind daher weder Stahldrähte 4A noch Edelstahldrähte 4B angeordnet. Im Ausführungsbeispiel sind zwei Lagen an Kupferdrähten 4C um den Kern 10 herumverseilt. Die außenliegende Lage bildet dabei eine äußerste Lage 12 und die dazwischenliegende eine Zwischenlage 14. Die Kupferdrähte 4C der äußersten Lage 12 sind allesamt als verzinnte Kupferdrähte 4C ausgebildet, bei denen die Kupferdrähte 4C also mit einer dünnen Zinnschicht 16 überzogen sind. Die Dicke der Zinnschicht liegt dabei typischerweise im Bereich von einigen 10 µm.

Die Durchmesser der verschiedenen Einzeldrähte 4 sind dabei im Ausführungsbeispiel der Figur unterschiedlich gewählt. Dabei ist in jeder Lage des Verseilverbunds jeweils ein gleicher Durchmesser gewählt. Im Ausführungsbeispiel weisen die Kupferdrähte 4C der Zwischenlage 14 einen größeren Durchmesser als die Einzeldrähte 4 des Kerns 10 sowie auch der äußersten Lage 12 auf.

Im Ausführungsbeispiel ist die äußerte Lage des Kerns 10 ausschließlich durch Stahldrähte 4A gebildet, welche also insoweit eine Armierungslage 18 ausbilden. Der Kern 10 ist im Ausführungsbeispiel insgesamt dreilagig ausgebildet, wobei die erste Lage durch einen Zentraldraht gebildet ist, welcher im Ausführungsbeispiel ein Edelstahldraht 4B ist. Um diesen herum sind in einer ersten Lage sechs weitere Einzeldrähte 4 verseilt. Im Ausführungsbeispiel wechseln hierbei Edelstahldrähte 4B mit Kupferdrähten 4C ab. Um diese zweite Lage ist schließlich als dritte Lage des Kerns 10 wie die Armierungslage 18 herum verseilt. Der Kern 10 weist daher im Ausführungsbeispiel einen Verseilverbund mit einem dreilagigem Aufbau auf bestehend aus einer 1-6-12-Verseilung von Einzeldrähten 4 mit gleichem Durchmesser.

Die einzelnen Frei- und Zwickelbereiche zwischen den Einzeldrähten 4 sind weiterhin mit einer Dichtmasse 20 ausgefüllt, welche eine hohe Hafteigenschaft aufweist.

Das hier beschriebene Kabel 2 zeichnet sich daher insgesamt durch einen Kern 10 aus, welcher eine Kombination aus unmagnetischen Edelstahldrähten und magnetischen Stahldrähten aufweist. Weiterhin ist um den Kern 10 zumindest die äußerste Lage 12 aus vorzugsweise verzinnten Kupferdrähten 4C angeordnet. Der Verseilverbund ist zudem weiterhin mit der klebrigen Dichtmasse 20, insbesondere fettgefüllt. Grundsätzlich können ergänzend auch noch die Stahldrähte 4A verzinkt sein. Bei einer Kombination mit verzinnten Kupferdrähten 4C sind diese von außen optisch nicht unterscheidbar.

Das Kabel 2 ist in seiner Eigenschaft als Erdungskabel insgesamt für eine Übertragung von hohen Strömen ausgelegt. Es ist daher insgesamt als Starkstromkabel ausgebildet. Hierunter wird verstanden, dass es für einen Dauerstrom im Bereich von 5A bis 2000A und insbesondere für Kurzschlussströme im Bereich von 20A bis 40000A ausgelegt ist. Unter Kurzschlussstrom wird dabei eine Strombelastung über einen Zeitraum von maximal 0,1 Sekunden verstanden. Die Durchmesser der Einzeldrähte 4 liegen dabei typischerweise im Millimeterbereich, beispielsweise im Bereich zwischen 1 bis 3 Millimeter.

Durch einen derartigen Aufbau sind folgende Vorteile im Hinblick auf einen Diebstahlschutz erzielt:
- Bei einem Recyceln lassen sich die unmagnetischen Edelstahldrähte nicht mittels Magnet aussortieren;
- Beim Recyceln lassen sich die zerhackten Kunststoffteile der Isolierung nicht mittels Pressluft von der zerhackten Metallteilen trennen, da die klebrige Dichtmasse 20 durch die verschiedenen Teile miteinander verklebt;
- Beim Recyceln werden die Messer stark abgenutzt;
- Annehmende Schrotthändler prüfen in der Regel vor Annahme der Ware, ob der Verseilverbund magnetisch ist und bezahlen dann für diese Ware nur einen geminderten Preis für Mischmetalle, sodass bereits nur ein geringerer Materialwert für die Entwender erzielbar ist;
- Bei einer Annahme kann unter Umständen nicht erkannt werden, dass sich die Dichtmasse 20 sowie die unmagnetischen Edelstahldrähte 4b weiterhin im Verseilverbund befinden. Allerdings ist aufgrund dieser Maßnahmen für ein nachgelagertes Recyclingunternehmen der Verseilverbund wegen der schwierigeren Recyclebarkeit deutlich weniger wert. Das nachgelagerte Recyclingunternehmen wird daher derartige Waren nur noch zu einem geringen Preis annehmen;
- Entwender prüfen üblicherweise das Kabel 2 vor dem Abtrennen von der geerdeten Einrichtung mit einem Magneten und bewerten dieses aufgrund des erkennbaren Magnetismus als Stahlseil, welches weniger wert ist;
- Entwender prüfen das Kabel 2 üblicherweise vor dem Abschneiden durch ein teilweises Entfernen des Kabelmantels 6 und bewerten aufgrund der optischen Ähnlichkeit der verzinnten Kupferdrähte 4c mit Stahldrähten den gesamten Verseilverbund als Stahlseil.

### Bezugszeichenliste

- 2: Kabel
- 4: Einzeldrähte
- 6: Kabelmantel
- 8: Markierung
- 10: Kern
- 12: äußerste Lage
- 14: Zwischenlage
- 16: Zinnschicht
- 18: Armierungslage
- 20: Dichtmasse
- 4A: Stahldrähte
- 4B: Edelstahldrähte
- 4C: Kupferdrähte

## Patentansprüche

1. Kabel (2), insbesondere Erdungskabel zur Erdung von Einrichtungen im Freiland, mit einer Mehrzahl von Einzeldrähten (4), die von einem Kabelmantel (6) umgeben sind, wobei die Einzeldrähte (4) in einem Kern (10) und zumindest in einer diesen umgebenden Lage (12, 14) angeordnet sind, wobei ein Teil der Einzeldrähte (4) als Kupferdrähte (4C) ausgebildet ist,
**dadurch gekennzeichnet,**
**dass** weiterhin eine Kombination aus magnetischen Einzeldrähten (4A) sowie zumindest einem nicht-magnetischen Einzeldraht (4B) aus einem von Kupfer verschiedenen Material vorliegt.

2. Kabel (2) nach dem vorhergehenden Anspruch,
**dadurch gekennzeichnet,**
**dass** der zumindest eine unmagnetischen Einzeldraht als Edelstahldraht (4B) ausgebildet ist.

3. Kabel (2) nach einem der vorhergehenden Ansprüche,
**dadurch gekennzeichnet,**
**dass** die magnetischen Einzeldrähte als Stahldrähte (4A) ausgebildet sind.

4. Kabel (2) nach einem der vorhergehenden Ansprüche,
**dadurch gekennzeichnet,**
**dass** die magnetischen Einzeldrähten und weitere der Einzeldrähte gemeinsam mit einer klebrigen Dichtmasse (20) verfüllt sind.

5. Kabel (2) nach dem vorhergehenden Anspruch,
**dadurch gekennzeichnet,**
**dass** lediglich der Kern (10) mit der Dichtmasse (20) verfüllt ist.

6. Kabel (2) nach einem der vorhergehenden Ansprüche,
**dadurch gekennzeichnet,**
**dass** der zumindest eine nicht-magnetische Einzeldraht (4B) sowie die magnetischen Einzeldrähte (4A) ausschließlich im Kern (10) angeordnet sind.

7. Kabel (2) nach einem der vorhergehenden Ansprüche,
**dadurch gekennzeichnet,**
**dass** der Kern (10) eine Armierungslage (18) aus Stahldrähten (4A) aufweist.

8. Kabel (2) nach einem der vorhergehenden Ansprüche,
**dadurch gekennzeichnet,**
**dass** es eine äußerste Lage (12) an Einzeldrähten (4) aufweist, die ausschließlich aus Kupferdrähten (4C) besteht.

9. Kabel (2) nach einem der vorhergehenden Ansprüche,
**dadurch gekennzeichnet,**
**dass** es maximal zwei äußere Lagen (12, 14) an Einzeldrähten (4) aufweist, die ausschließlich aus Kupferdrähten (4C) bestehen.

10. Kabel (2) nach einem der vorhergehenden Ansprüche,
**dadurch gekennzeichnet,**
**dass** es eine äußerste Lage (12) an Einzeldrähten (4) aufweist, in der Kupferdrähte (4C) angeordnet sind, die verzinnt sind.

11. Kabel (2) nach dem vorhergehenden Anspruch,
**dadurch gekennzeichnet,**
**dass** die äußerste Lage (12) ausschließlich aus verzinnten Kupferdrähten (4C) besteht.

12. Kabel (2) nach einem der vorhergehenden Ansprüche,
**dadurch gekennzeichnet,**
**dass** die Einzeldrähte (4) miteinander verseilt sind, wobei der Kern (10) eine Kombination von zumindest einem Edelstahldraht (4B) und Stahldrähten (4A) aufweist und der Kern mit einer klebrigen Dichtmasse (20) verfüllt ist, und dass um den Kern (10) eine äußerste Lage (12) bestehend aus verzinnten Kupferdrähten (4C) angebracht ist.

13. Verwendung eines Kabels (2) nach einem der vorhergehenden Ansprüche als Erdungskabel zur Erdung einer Einrichtung im Freiland, insbesondere zur Erdung von Eisenbahneinrichtungen.
